# EUROPÄISCHE PATENTSCHRIFT

(11) **EP 1 336 086 B1**
(45) Veröffentlichungstag und Bekanntmachung des Hinweises auf die Patenterteilung: **06.03.2013**
(21) Anmeldenummer: 01987873.5
(22) Anmeldetag: 15.09.2001
(51) Int. Cl.: G01L 9/00

(54) **DRUCKMESSZELLE**
PRESSURE MEASURING CELL
CELLULE DE MESURE DE PRESSION

(30) Priorität: 19.10.2000 DE 10052053
(43) Veröffentlichungstag der Anmeldung: 20.08.2003
(73) Patentinhaber: Endress + Hauser GmbH + Co. KG, 79689 Maulburg (DE)
(72) Erfinder: BANHOLZER, Karl-Heinz, 79688 Hausen (DE); FLÖGEL, Karl, 79650 Schopfheim (DE); HEGNER, Frank, 79540 Lörrach (DE); ROSSKOPF,Bernd, 79688 Hausen i.W. (DE)
(74) Vertreter: Andres, Angelika Maria
(86) Internationale Anmeldenummer: PCT/EP2001/010684
(87) Internationale Veröffentlichungsnummer: WO 2002/033372

(56) Entgegenhaltungen:
- EP-A1- 0 516 579
- EP-A2- 0 476 309
- DE-A1- 2 556 947
- DE-A1- 3 128 032
- US-A- 419 219
- US-A- 5 050 034
- PATENT ABSTRACTS OF JAPAN vol. 016, no. 117 (P-1328), 24. März 1992 (1992-03-24) & JP 03 287037 A (HITACHI CONSTR MACH CO LTD), 17. Dezember 1991 (1991-12-17)

## Beschreibung

Die Erfindung betrifft eine kapazitive Druckmeßzelle.

In der Druckmeßtechnik werden z.B. Absolutdruck-, Relativdruck- und Differenzdruckmeßzellen verwendet. Bei Absolutdruckmeßzellen wird ein zu messender Druck absolut, d.h. als Druckunterschied gegenüber einem Vakuum erfaßt. Mit einer Relativdruckmeßzelle wird ein zu messender Druck in Form eines Druckunterschiedes gegenüber einem Referenzdruck, z.B. einem Druck, der dort herrscht, wo sich der Sensor befindet, aufgenommen. Bei den meisten Anwendungen ist dies der Atmosphärendruck am Einsatzort. Es wird also bei Absolutdruckmeßzellen ein zu messender Druck bezogen auf einen festen Bezugsdruck, den Vakuumdruck, und bei Relativdruckmeßzellen ein zu messender Druck bezogen auf einen variablen Bezugsdruck, z.B. den Umgebungsdruck, erfaßt. Eine Differenzdruckmeßzelle erfaßt eine Differenz zwischen einem ersten und einem zweiten an der Meßzelle anliegenden Druck.

Es sind Druckmeßzellen auf dem Markt, mit
- einem Grundkörper,
- einer mit dem Grundkörper unter Bildung einer Meßkammer verbundenen Membran,
- die im Betrieb eine von einem zu messenden Druck abhängige Auslenkung erfährt,
- einer auf einer membran-zugewandten Seite des Grundkörpers in der Meßkammer angeordneten Elektrode,
   -- die zusammen mit einer auf der Membran aufgebrachten Gegenelektrode einen Kondensator bildet, dessen Kapazität ein Maß für die Auslenkung der Membran ist.

Bei solchen Druckmeßzellen kann ein elektrischer Anschluß der Elektrode entweder durch einen Zwischenraum zwischen Membran und Grundkörper (EP-A-419219) oder durch den Grundkörper hindurch erfolgen. Im erstgenannten Fall muß ein Fügematerial, durch das Membran und Grundkörper miteinander verbunden sind, ein elektrischer Isolator sein. Eine Kontaktierung durch den Grundkörper hindurch ist vorzuziehen, da sie die Verbindung zwischen Grundkörper und Membran unbeeinträchtigt und damit dicht und mechanisch stabil läßt und da sie keine Einschränkung bei der Auswahl des Fügematerials mit sich bringt.

EP 0 419 219 A2 offenbart einen kapazitiven Drucksensor mit einer flexiblen Messmembran, die mittels einer Fügestelle aus Glas entlang ihres Rands mit einem Grundkörper verbunden ist. Die Elektroden des kapazitiven Drucksensors sind über Kontaktstifte, die sich durch Bohrungen in dem Grundkörper erstrecken, und durch ein leitfähiges Epoxidharz kontaktiert, welches die Kontaktstifte umgibt und sich bis zu Anschlussflächen der Elektroden erstreckt.

US-A-5 050 034 offenbart einen kapazitiven Drucksensor mit einem Grundkörper und einer Membran, die unter Bildung einer mindestens am Rand dicht abgeschlossenen Kammer dicht zusammengefügt sind, wobei Grundkörper und/oder Membran aus Keramik, Glas oder einem einkristallinen Material bestehen, die Membran auf der dem Grundkörper zugewandten Seite mit einer an deren freier Oberfläche von einer Schutzschicht bedeckten, als die eine Kondensator-Elektrode dienenden Schicht aus Siliciumkarbid, Niob oder Tantal beschichtet ist, der Grundkörper innerhalb der Kammer auf der der Membran zugewandten Seite mit mindestens einer weiteren, an deren freier Oberfläche von einer weiteren Schutzschicht bedeckten, als die zweite Kondensator-Elektrode dienenden Schicht aus einem der genannten Materialien beschichtet ist und Grundkörper sowie Membran durch ein zugleich als Abstandshalter dienendes Formteil aus Aktivlot miteinander verlötet sind, mit elektrischer Kontaktierung der Kondensator-Elektroden von der membranabgewandten Seite des Grundkörpers her mittels bis zu der zweiten Kondensator-Elektrode gegebenenfalls bis zum Aktivlot führender Aktivloteinsätze wobei jede Kondensator-Elektrode des Grundkörpers an der Kontaktstelle einen Kapillarstopper in Form einer Aufweitung der den Aktivloteinsatz enthaltenden Bohrungen aufweist.

Bei herkömmlichen Kontaktierungen durch den Grundkörper hindurch wird ein metallischer Kontaktstift in eine den Grundkörper durchdringende Bohrung eingesetzt und endseitig, z.B. mit einem Dorn, verpreßt. Hierdurch wird der Kontaktstift mechanisch fixiert und es entsteht eine elektrische Kontaktstelle zur Elektrode des Grundkörpers.

Dieses Verfahren liefert bei den meisten Anwendungen sehr gute Ergebnisse und ist schnell und kostengünstig durchführbar. Es gibt jedoch Anwendungen, bei denen dieses Verfahren des Verpressens nachteilig ist.

Durch das Verpressen wird nur eine geringe Dichtheit erzielt. Eine Vakuumdichtheit, wie sie z.B. bei Absolutdruckmeßzellen erforderlich ist, ist nicht erzielbar. Es ist folglich insb. bei Absolutdruckmeßzellen eine separate Abdichtung der Durchkontaktierung erforderlich.

Durch das Verpressen ist eine Innenfläche der Meßkammer im Bereich der Bohrung und des Metalistifts uneben und weist Ausnehmungen, z.B. Spalte oder Vertiefungen, auf.

Diese Unregelmäßigkeiten in der Innenfläche führen z.B. dann zu Problemen, wenn die Innenfläche als Membranbett genutzt werden soll, an das sich die Membran im Falle einer Überlast anschmiegt. Unregelmäßigkeiten des Membranbetts können im Überlastfall bleibende Veränderungen der Membran zur Folge, die nachfolgend zu gravierenden Meßfehlem oder sogar zum Totalausfall der Druckmeßzelle führen können.

Geometrische Unregelmäßigkeiten, insb. Spalte, können im Bereich der elektrischen Kontaktstelle, unter Umständen zu erhöhten Übergangswiderständen und damit verbundenen Nachteilen bei der Meßwertaufnahme führen.

Weitere Probleme treten auf, wenn die Meßkammer mit einer Druckmittlerflüssigkeit gefüllt werden soll. Bei flüssigkeitsgefüllten Druckmeßzellen wird vorzugsweise ein nur sehr geringes Flüssigkeitsvolumen verwendet, da eine thermische Ausdehnung der Flüssigkeit über die Temperatur möglichst gering zu halten ist. Entsprechend wichtig ist es für die Meßgenauigkeit, daß das Volumen, in das die Flüssigkeit eingefüllt wird, möglichst konstant ist. Dellen, Spalte oder andere Formen von Ausnehmungen, in die ein Flüssigkeitsvolumen unbekannter Größe im Laufe der Zeit eindringen kann, sind unbedingt zu vermeiden. Bei Differenzdruckmeßzellen Ist es besonders wichtig, daß das Volumen nicht nur möglichst konstant ist, sondern daß in beiden Hälften der Differenzdruckmeßzelle möglichst die gleiche Flüssigkeitsmenge vorhanden ist. Ungleiche Flüssigkeitsmengen haben ungleiche Temperaturgänge zur Folge, die sich direkt auf die Meßgenauigkeit auswirken.

Es ist eine Aufgabe der Erfindung, eine Druckmeßzelle anzugeben, bei der eine auf dem Grundkörper in der Meßkammer angeordnete Elektrode durch den Grundkörper hindurch elektrisch angeschlossen ist und bei der die Meßkammer im Bereich der Kontaktierung eine glatte Oberfläche und eine vakuumdichte und druckfeste Verbindung aufweist.

Hierzu besteht die Erfindung in einer Druckmeßzelle mit
- einem Grundkörper,
- einer mit dem Grundkörper unter Bildung einer Meßkammer verbundenen Membran,
- die im Betrieb eine von einem zu messenden Druck abhängige Auslenkung erfährt,
- einem durch eine membran-zugewandte Oberfläche des Grundkörpers gebildeten Membranbett,
   -- auf das mindestens eine Elektrode aufgebracht ist,
   -- die zusammen mit einer auf der Membran aufgebrachten Gegenelektrode einen Kondensator bildet, dessen Kapazität ein Maß für die Auslenkung der Membran ist, und
- einem durch eine Bohrung durch den Grundkörper hindurch geführten Kontaktstift,
   -- über den die Elektrode zur Messung der Kapazität elektrisch angeschlossen ist und
   -- der membranbett-seitig mit einem Lot in die Bohrung eingelötet ist,
   -- *dadurch gekennzeichnet, dass der Kontaktstift, das Lot und das Membranbett eine durch Schleifen geglättete, glatte Oberfläche bilden.*

JP3287037 offenbart einen Drucksensor mit Dehnungssensoren auf einer Messmembran, die über elektrische Durchführungen im Randbereich der Membran kontaktiert sind.

EP0516579 offenbart eine Durchkontaktierung einer Bohrung eines hochtemperaturbeständigen und vakuumtauglichen Isolierstoffteils, insb. aus Keramik , aus Glas oder aus einem Einkristall, insbesondere eines Bauteils eines Drucksensors welche Durchkontaktierung aus einem in die Bohrung eingesetzten metallischen Anschlussleiter besteht, dessen thermischer Ausdehnungskoeffizient kleiner als der des Isolierstoffteils ist und dessen mindestens eines Ende, wenn es mit mindestens einer Oberfläche des Isotierstoffteils fluchtet, mittels Aktivhartlot überdeckt ist, das ihn mit dem Isolierstoffteil hochvakuumdicht vertötet, oder, wenn das Ende aus mindestens einer Oberfläche hervorsteht, ringförmig mittels Aktivhartlot mit dem Isolierstoffteil höchvakuumdicht verlötet ist.

Gemäß einer Ausgestaltung bestehen Grundkörper und/oder Membran aus Keramik oder aus einem Einkristall.

Gemäß einer weiteren Ausgestaltung besteht der Kontaktstift aus Tantal und das Lot ist ein Aktivlot, insb. ein Silber-Kupfer-Lot.

Gemäß einer weiteren Ausgestaltung wirkt auf die Membran im Betrieb ein zu messender Druck ein und in der Meßkammer herrscht ein sehr kleiner Druck nahe 0 mbar oder ein durch den Grundkörper hindurch zugeführter Referenzdruck.

Gemäß eine anderen Ausgestaltung ist die Membran zwischen dem Grundkörper und einem weiteren Grundkörper angeordnet, die Membran und der weitere Grundkörper bilden eine weitere Meßkammer, und im Betrieb herrscht in der Meßkammer ein erster Druck und in der weiteren Meßkammer ein zweiter Druck. Die Auslenkung der Membran hängt von einem zu messenden Druck ab, der der Differenz des ersten und des zweiten Drucks entspricht.

Gemäß einer weiteren Ausgestaltung der letztgenannten Ausgestaltung weist der Grundkörper eine durchgehende in die Meßkammer führende Bohrung auf, in die ein Druckröhrchen eingeführt ist, über das im Betrieb der erste Druck der Meßkammer zugeführt ist, und der weitere Grundkörper weist eine durchgehende in die Meßkammer führende Bohrung auf, in die ein Druckröhrchen eingeführt ist, über das im Betrieb der zweite Druck der weiteren Meßkammer zugeführt ist.

Weiter besteht die Erfindung in einem Verfahren zur Herstellung einer Druckmeßzelle bei dem
- der Kontaktstift in die Bohrung eingesetzt wird
- zwischen dem Grundkörper und dem Kontaktstift membranbett-seitig ein Lot eingebracht wird,
- der Kontaktstift eingelötet wird,
- *das Membranbett glatt geschliffen wird,*
- *die Elektrode auf das glatte Membranbett aufgebracht wird, und*
- *Grundkörper und Membran durch eine Fügung fest miteinander verbunden werden.*

Gemäß einer Ausgestaltung des Verfahrens wird die Membran mit dem Grundkörper und dem weiteren Grundkörper mittels einer Fügung verbunden und das erste Druckröhrchen wird in den Grundkörper und das zweite Druckröhrchen in den weiteren Grundkörper eingelötet.

Die Erfindung und weitere Vorteile werden nun anhand der Figuren der Zeichnung, in denen drei Ausführungsbeispiele dargestellt sind, näher erläutert. Gleiche Elemente sind in den Figuren mit den gleichen Bezugszeichen versehen.
Fig. 1 zeigt einen Schnitt durch eine erfindungsgemäße Druckmeßzelle, die als kapazitive Absolutdruckmeßzelle aufgebaut ist;
Fig. 2 zeigt einen Schnitt durch eine erfindungsgemäße Druckmeßzelle, die als kapazitive Relativdruckmeßzelle aufgebaut ist; und
Fig. 3 zeigt einen Schnitt durch eine erfindungsgemäße Druckmeßzelle, die als kapazitive Differenzdruckmeßzelle aufgebaut ist.

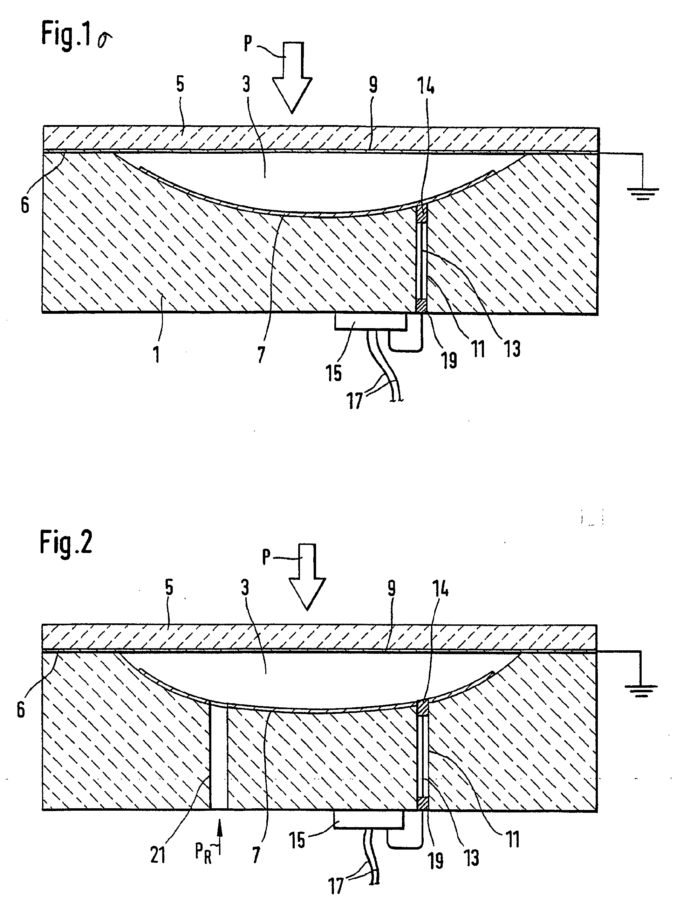

Fig. 1 zeigt einen Schnitt durch eine erfindungsgemäße Druckmeßzelle. Sie weist einen zylindrischen Grundkörper 1 und eine mit dem Grundkörper 1 unter Bildung einer Meßkammer 3 verbundene kreisscheibenförmige Membran 5 auf.

Membran 5 und Grundkörper 1 bestehen aus einem Isolator, vorzugsweise aus Keramik oder aus einem Einkristall, z.B. aus Saphir. Sie sind miteinander durch eine Fügung 6, z.B. mittels eines Aktivhartlots, wie z.B. einem Zirkon-Eisen-Titan-Beryllium-Lot, an einem jeweils äußeren ringförmigen Rand verbunden.

Im Betrieb erfährt die Membran 5 eine von einem zu messenden Druck p abhängige Auslenkung. Hierzu wirkt z.B. außen auf die Membran 5 der Druck p ein. Dies ist in Fig. 1 durch einen Pfeil symbolisch dargestellt.

Eine membran-zugewandte Oberfläche des Grundkörpers 1 bildet ein Membranbett. Auf dem Membranbett ist eine Elektrode 7 aufgebracht, die zusammen mit einer auf der Membran 5 aufgebrachten Gegenelektrode 9 einen Kondensator bildet, dessen Kapazität ein Maß für die Auslenkung der Membran 5 ist.

Die Gegenelektrode 9 grenzt an deren äußerem Rand elektrisch leitend an die Fügung 6 an und ist vorzugsweise über die elektrisch leitfähige Fügung 6 an Masse oder an ein festes Referenzpotential angeschlossen.

Der Grundkörper 1 weist eine durchgehende Bohrung 11 auf, durch die ein Kontaktstift 13 hindurch geführt ist. Der Kontaktstift 13 besteht aus einem elektrisch leitfähigen Material und ist membranbett-seitig mit einem Lot 14 in die Bohrung 11 eingelötet. Für den Kontaktstift 13 ist z.B. Tantal besonders geeignet, da es ein hoch schmelzendes, duktiles Material ist. Es ist gegen fast alle Säuren und Alkalien beständig und besonders korrosionsfest. Wird für die Membran 5 und den Grundkörper 1 eine Aluminiumoxidkeramik verwendet bietet Tantal den weiteren Vorteil, daß es einen thermischen Ausdehnungskoeffizienten aufweist, der dem der Aluminiumoxidkeramik sehr ähnlich ist. Als Lot ist ein Aktivhartlot, insb. ein Silber-Kupfer-Lot besonders gut geeignet. Damit ist ein hermetisch dichter Abschluß zwischen dem Kontaktstift 13 und der Bohrung 11 herstellbar.

Der Kontaktstift 13, das Lot 14 und das Membranbett bilden erfindungsgemäß eine glatte Oberfläche. Eine saubere glatte Oberfläche, z.B. eine geschliffene Oberfläche, bietet den Vorteil, daß sie eine homogene Kontaktfläche darstellt. Eine solche Kontaktfläche geht mit der nachträglich aufgebrachten Elektrode 7 ein flächige Verbindung ein, über die ein gut leitender elektrischer Anschluß vorliegt.

Ein weiterer Vorteil besteht darin, daß durch die glatte Oberfläche an dieser Stelle ein insgesamt glattes Membranbett entsteht, an das sich die Membran 5 im Überlastfall ohne Schaden zu nehmen anschmiegen kann. Die Membran 5 wird also auch bei hohen Überlasten, z.B. von 40000 kPa (400 bar), sicher aufgefangen und die Meßzelle arbeitet nach Abklingen der Überlast innerhalb deren Spezifikation weiter einwandfrei.

Über den Kontaktstift 13 ist die Elektrode 7 zur Messung der Kapazität elektrisch angeschlossen. Hierzu ist ein erstes Ende des Kontaktstifts 13 elektrisch leitend mit der Elektrode 7 verbunden. Ein verbteibendes zweites Ende ragt aus dem Grundkörper 1 heraus und ist in dem gezeigten Ausführungsbeispiel einer auf dem Grundkörper 1 angeordneten elektronischen Schaltung 15 zugeführt. Die elektronische Schaltung 15 formt die Kapazitätsänderungen des Kondensators in ein elektrisches Ausgangssignal, z.B. in eine sich entsprechend ändernde elektrische Spannung, um. Das Ausgangssignal steht über Anschlußleitungen 17 einer weiteren Verarbeitung und/oder Auswertung zur Verfügung.

Zur Erzielung einer höheren Dichtheit und einer verbesserten mechanischen Stabilität kann der Kontaktstift 13 auch an membranbett-abgewandter Seite mit einem Lot 19 mit der Bohrung 11 verbunden sein. Dies bietet zusätzlich den Vorteil, daß auf das membranbett-zugewandte Ende des Kontaktstifts 13 und damit auf den elektrischen Kontakt zur Elektrode 7 keine mechanischen Kräfte übertragen werden können. Von außen einwirkende Kräfte werden an der membranbett-abgewandten Seite durch die Befestigung mit dem Lot 19 abgefangen.

Für den Fall, daß die im Bereich der Kontaktierung aneinander angrenzenden Materialien unterschiedliche thermische Ausdehnungskoeffizienten aufweisen und die Druckmeßzelle unter Umständen erheblichen Temperaturänderungen ausgesetzt ist, kann es günstiger sein, den Kontaktstift 13 nur einseitig endseitig einzulöten oder die Bohrung 11 über deren gesamte Länge mit Lot zu füllen.. Letztere Variante bietet den Vorteil, daß sich temperatur-bedingte Spannungen über die gesamte Länge verteilen.

Selbstverständlich ist die Erfindung nicht auf Druckmeßzellen mit einer einzigen Elektrode und deren erfindungsgemäßen Anschluß über einen eingelöteten Kontaktstift beschränkt. Es können selbstverständlich mehrere Elektroden vorgesehen sein, die auf die in den dargestellten Ausführungsbeispielen beschriebene Weise elektrisch angeschlossen sind.

In Fig. 1 ist eine Absolutdruckmeßzelle dargestellt. Die Meßkammer 3 ist evakuiert, so daß im Inneren der Meßkammer ein sehr geringer Druck nahe 0 mbar herrscht, und der zu messende Druck p wird bezogen auf den Vakuumdruck im Inneren der Meßkammer 3 erfaßt.

Auf völlig analoge Weise kann eine Referenzdruckmeßzelle aufgebaut sein. Ein Ausführungsbeispiel hierzu ist in Fig. 2 dargestellt. Es unterscheidet sich von der in Fig. 1 dargestellten Absolutdruckmeßzelle lediglich darin, daß die Meßkammer 3 nicht evakuiert ist. Statt dessen herrscht in der Meßkammer 3 ein durch den Grundkörper 1 hindurch zugeführten Referenzdruck p_{R}. Der Referenzdruck p_{R} ist z.B. ein Druck, der in der Umgebung der Meßzelle herrscht. Er kann z.B. wie in Fig. 2 dargestellt durch eine den Grundkörper 1 durchdringende Bohrung 21 in die Meßkammer 3 eingeführt sein.

Hergestellt werden die in den in Fig. 1 und 2 dargestellten Druckmeßzellen, indem zunächst der Kontaktstift 13 membranbett-seitig frontbündig in die Bohrung 11 eingesetzt wird.

Zwischen dem Grundkörper 1 und dem Kontaktstift 13 wird membranbett-seitig und gegebenenfalls auch auf einer dem Membranbett gegenüberliegenden Seite das Lot 14, 19 eingebracht. Anschließend wird der Kontaktstift 13 einseitig oder beidseitig in einem Ofen unter Vakuum oder in einer Schutzgasatmosphäre eingelötet.

In einem nächsten Arbeitsschritt wird das Membranbett geschliffen bis es eine glatte und aufgrund des Lots 14 insb. spaltfreie Oberfläche aufweist.

Auf diese glatte und insb. spaltfreie Oberfläche wird die Elektrode 7 aufgebracht, z.B. aufgesputtert oder aufgedampft. Die Elektrode 7 besteht vorzugsweise ebenfalls aus Tantal. Andere Metalle sind jedoch ebenfalls einsetzbar.

Aufgesputterte oder aufgedampfte Elektroden sind sehr präzise mit geringen Dicken, z.B. von 0,1 µm, herstellbar. Die durch das Einlöten des Kontaktstift 13 erzielbare glatte Oberfläche ist bei diesen geringen Schichtdicken besonders vorteilhaft, da sie auch bei geringen Schichtdicken eine gute elektrische Kontaktfläche liefert.

Mit dem gleichen Verfahren wird auch die Membran 5 mit der Gegenelektrode 9 versehen und in einem letzten Arbeitsschritt erfolgt die Fügung 6 zwischen der Membran 5 und dem Grundkörper 1. Hierzu wird das Fügematerial, z.B. das vorgenannte Zirkon-Eisen-Titan-Beryllium Aktivhartlot, auf eine ringscheibenförmige Fläche am Rand des Grundkörpers 1 aufgebracht und es wird die Membran 5 darauf gesetzt. Grundkörper 1 und Membran 5 werden durch Fügung in einem Ofen unter Vakuum oder in einer Schutzgasatmosphäre fest miteinander verbunden.

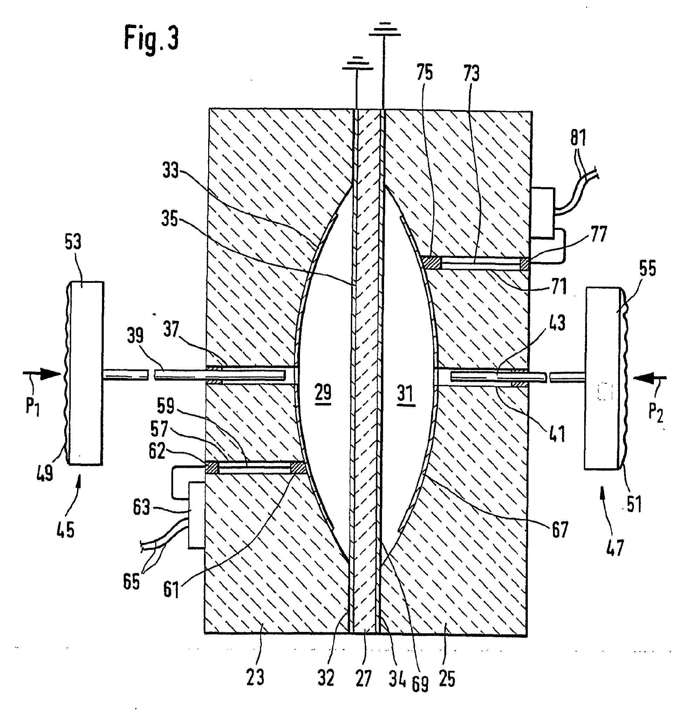

In Fig. 3 ist ein weiteres Ausführungsbeispiel einer erfindungsgemäßen Druckmeßzelle dargestellt. Es handelt sich hier um eine Differenzdruckmeßzelle.

Sie weist einen Grundkörper 23 und einen weiteren Grundkörper 25 auf. Zwischen dem Grundkörper 23 und dem weiteren Grundkörper 25 ist eine Membran 27 angeordnet. Die Membran 27 ist mit dem Grundkörper 23 unter Bildung einer Meßkammer 29 und mit dem weiteren Grundkörper 25 unter Bildung einer weiteren Meßkammer 31 verbunden.

Membran 27, Grundkörper 23 und weiterer Grundkörper 25 bestehen aus einem Isolator, vorzugsweise aus Keramik oder aus einem Einkristall, z.B. aus Saphir. Die Grundkörper 23, 25 sind mit der Membran 27 jeweils durch eine Fügung 32, 34, z.B. mittels eines Aktivhartlots, wie z.B. einem Zirkon-Eisen-Titan-Beryllium-Lot, an einem jeweils äußeren ringförmigen Rand verbunden.

Im Betrieb herrscht in der Meßkammer 29 ein erster Druck p1 und in der weiteren Meßkammer 31 ein zweiter Druck p2. Die Auslenkung der Membran 27 hängt von einem zu messenden Druck ab, der der Differenz des ersten und des zweiten Drucks p1, p2 entspricht.

Zur Druckzufuhr weist der Grundkörper 23 eine durchgehende in die Meßkammer 29 führende Bohrung 37 auf, in die ein Druckröhrchen 39 eingeführt ist. Über das Druckröhrchen 39 ist im Betrieb der erste Druck p1 der Meßkammer 29 zugeführt. Analog weist der weitere Grundkörper 25 zur Druckzufuhr eine durchgehende in die Meßkammer 31 führende Bohrung 41 auf, in die ein Druckröhrchen 43 eingeführt ist. Über das Druckröhrchen 43 ist im Betrieb der zweite Druck p2 der Meßkammer 31 zugeführt.

Die Druckröhrchen 39, 43 sind in dem gezeigten Ausführungsbeispiel jeweils mit einem Druckmittler 45, 47 verbunden. Die Druckmittler 45, 47 weisen jeweils eine Trennmembran 49, 51 auf, die jeweils eine Kammer 53, 55 abdeckt. Von außen wirkt auf die Trennmembran 49 der erste Druck p1 und auf die zweite Trennmembran 51 der zweite Druck p2 ein. Die Kammern 53, 55, die Druckröhrchen 39, 43 und die Meßkammern 29, 31 sind mit einer weitgehend inkompressiblen Flüssigkeit, z.B. einem Silikonöl gefüllt. Durch die Flüssigkeit werden die von außen auf die Trennmembranen 49, 51 einwirkenden ersten und zweiten Drücke p1, p2 auf jeweils eine Seite der Membran 27 übertragen.

Genau wie bei den zuvor beschriebenen Druckmeßzellen sind auch hier Kondensatoren als elektromechanische Wandler eingesetzt. Es ist auch bei dieser Druckmeßzelle auf einem durch eine membran-zugewandte Oberfläche des Grundkörpers 23 gebildeten Membranbett, eine Elektrode 33 aufgebracht, die zusammen mit einer auf der Membran 27 aufgebrachten Gegenelektrode 35 einen Kondensator bildet, dessen Kapazität ein Maß für die Auslenkung der Membran 27 ist. Die Gegenelektrode 35 ist über die daran angrenzende Fügung 32 elektrisch leitend mit einem Referenzpotential, z.B. Erde, verbunden.

Die linke Hälfte der Differenzdruckmeßzelle von Fig. 3 mit dem Grundkörper 23, der Membran 27, der Elektrode 33 und der Gegenelektrode 35 ist von Grundsatz her den in den Figuren 1 und 2 dargestellten Meßzellen nachempfunden. Die Meßkammer 29 ist jedoch, wie bereits erwähnt, flüssigkeitsgefüllt und an den Druckmittler 45 angeschlossen.

Genau wie bei den vorangegangenen Ausführungsbeispielen ist auch hier wieder ein durch eine Bohrung 57 durch den Grundkörper 23 hindurch geführter Kontaktstift 59 vorgesehen, über den die Elektrode 33 zur Messung der Kapazität elektrisch angeschlossen ist. Der Kontaktstift 59 ist membranbett-seitig mit einem Lot 61 in die Bohrung 57 eingelötet und der Kontaktstift 59, das Lot 61 und das Membranbett bilden eine glatte, z.B. geschliffene, Oberfläche.

Vorzugsweise ist die rechte Hälfte der Differenzdruckmeßzelle identisch zu der linken Hälfte aufgebaut und weist eine auf einer membran-zugewandten Oberfläche des Grundkörpers 25 aufgebrachte Elektrode 67 auf, die zusammen mit einer auf der Membran 27 aufgebrachten Gegenelektrode 69 einen Kondensator bildet, dessen Kapazität ein Maß für die Auslenkung der Membran 27 ist. Die Gegenelektrode 69 ist über die daran angrenzende Fügung 34 elektrisch leitend mit einem Referenzpotential, z.B. Erde, verbunden.
Genau wie auf der linken Seite ist auch auf der rechten Seite ein durch eine Bohrung 71 durch den Grundkörper 25 hindurch geführter Kontaktstift 73 vorgesehen, über den die Elektrode 67 zur Messung der Kapazität elektrisch angeschlossen ist. Der Kontaktstift 73 ist membranbett-seitig mit einem Lot 75 in die Bohrung 71 eingelötet und der Kontaktstift 73, das Lot 75 und das bilden Membranbett eine glatte, z.B. geschliffene, Oberfläche.

Neben den zuvor beschriebenen Vorteilen bietet die glatte Oberfläche bei dem in Fig. 3 dargestellten Ausführungsbeispiel den zusätzlichen Vorteil, daß keine Ausnehmungen vorhanden sind, in die eine undefinierte Menge Flüssigkeit eindringen kann. Ein genau konstantes möglichst geringes und in beiden Hälften möglichst identisches Flüssigkeitsvolumen ist eine wichtige Voraussetzung zur Erzielung einer hohen Meßgenauigkeit.

Ebenfalls analog zu den vorangegangenen Ausführungsbeispielen können auch die Kontaktstifte 59, 73 an einer membranbett-abgewandten Seite mittels eines Lots 62 in den Grundkörpers 23 bzw. mittels eines Lots 77 in den Grundkörpers 25 eingelötet werden. Bei den meisten Anwendungen wird jedoch eine einseitige membranbett-zugewandte Einlötung genügen.

Der Kontaktstift 59 ist mit einer elektronischen Schaltung 63 verbunden, die die momentane Kapazität des Kondensator erfaßt und in ein elektrisches Ausgangssignal umwandelt, das über Anschlußleitungen 65 einer weiteren Verarbeitung und/oder Auswertung zur Verfügung steht.

Analog ist der Kontaktstift 73 mit einer elektronischen Schaltung 79 verbunden, die die momentane Kapazität des Kondensator erfaßt und in ein elektrisches Ausgangssignal umwandelt, das über Anschlußleitungen 81 einer weiteren Verarbeitung und/oder Auswertung zur Verfügung steht.

Vorzugsweise wird eine Differenz der beiden Kapazitäten gebildet und daraus die auf die Druckmeßzelle einwirkende Druckdifferenz ermittelt.

Das Herstellverfahren für den in Fig. 3 dargestellten Differenzdruckmeßzelle entspricht im wesentlichen dem zuvor beschriebenen Herstellverfahren. Es werden daher nachfolgend lediglich die Unterschiede näher erläutert.

Diese bestehen im wesentlichen darin, daß die Membran 27 mit dem Grundkörper 23 und dem weiteren Grundkörper 25 mittels einer Fügung verbunden wird. Dies kann in einem einzigen Arbeitsgang erfolgen. Vorzugsweise wird in diesem Arbeitsgang auch das erste Druckröhrchen 39 in den Grundkörper 23 und das zweite Druckröhrchen 43 in den weiteren Grundkörper 25 eingelötet.

Die Druckröhrchen 39, 43 bestehen z.B. aus einem Edelstahl und werden z.B. mit einem Aktivhartlot, z.B. einem Silber-Kupfer-Lot in die Grundkörper 23, 25 eingelötet. Alternativ können auch hochwertigere Materialien für die Druckröhrchen 39, 43 verwendet werden. Beispiele hierfür sind Tantal oder Eisen-Nickel-Kobalt-Legierungen, wie sie z.B. unter den Handelsnamen Kovar oder Vacon erhältlich sind.

Es wird zunächst Lot zwischen die Membran 27 und den ersten und den zweiten Grundkörper 23, 25, sowie in die Bohrungen 37, 41 eingebracht. Dann werden die Druckröhrchen 39, 43 eingeführt und die Meßzelle in einen Ofen eingebracht in dem die Lötungen unter Vakuum oder in einer Schutzgasatmosphäre erfolgen.

Natürlich ist die Erfindung nicht auf Druckmeßzellen mit einer einzigen Elektrode beschränkt. Bei allen beschriebenen Ausführungsbeispielen können anstelle der einzelnen Elektroden 7, 33, 67 auch jeweils zwei oder mehr Elektroden zur Meßwertaufnahme und z.B. auch zu Kalibrationszwecken eingesetzt werde. Diese Elektroden sind dann ebenfalls auf dem jeweiligen Grundkörper 1, 23, 25 angeordnet und die einzelnen Elektroden sind jeweils auf die zuvor beschriebene Weise mittels in entsprechende Bohrungen eingelöteten Kontaktstiften angeschlossen.

## Patentansprüche

1. Druckmesszelle mit
- einem Grundkörper (1, 23, 25), wobei der Grundkörper aus Keramik oder einem Einkristall besteht;
- einer mit dem Grundkörper (1, 23, 25) unter Bildung einer Messkammer (3, 29, 31) verbundenen Membran (5, 27), wobei die Membran aus Keramik oder einem Einkristall besteht;
- die im Betrieb eine von einem zu messenden Druck (p, p1-p2) abhängige Auslenkung erfährt,
- einem durch eine membran-zugewandte Oberfläche des Grundkörpers (1, 23, 25) gebildeten Membranbett,
-- auf das mindestens eine Elektrode (7, 33,67) aufgebracht ist,
--- die zusammen mit einer auf der Membran (5, 27) aufgebrachten Gegenelektrode (9, 35, 69) einen Kondensator bildet, dessen Kapazität ein Maß für die Auslenkung der Membran (5, 27) ist, und
- einem durch eine Bohrung (11, 57, 71) durch den Grundkörper (1, 23, 25) hindurch geführten Kontaktstift (13, 59, 73),
-- über den die Elektrode (7, 33, 67) zur Messung der Kapazität elektrisch angeschlossen ist und
-- der membranbett-seitig mit einem Lot (14, 61,75) in die Bohrung (11, 57, 71) eingelötet ist,
--- **dadurch gekennzeichnet, dass** der Kontaktstift (13, 59, 73), das Lot (14, 61, 75) und das Membranbett eine durch Schleifen geglättete, glatte Oberfläche bilden,
die mit der nachträglich aufgebrachten Elektrode (7,33,67) eine flächige Verbindung eingeht über die ein gut leitender elektrischer Anschluss vorliegt und durch die glatte Oberfläche an dieser Stelle ein insgesamt glattes Membranbett entsteht, an das sich die Membran (5) im Überlastfall ohne Schaden zu nehmen anschmiegen kann.

2. Druckmesszelle nach Anspruch 1, bei der der Kontaktstift (13, 59, 73) aus Tantal besteht und das Lot ein Aktivhartlot, insb. ein Silber-Kupfer-Lot ist.

3. Druckmesszelle nach Anspruch 1, bei der auf die Membran (5, 27) im Betrieb ein zu messender Druck (p) einwirkt,
und bei der in der Messkammer (3) ein sehr kleiner Druck nahe 0 mbar oder
ein durch den Grundkörper (1) hindurch zugeführter Referenzdruck (p_{R}) herrscht.

4. Druckmesszelle nach Anspruch 1, bei der
- die Membran (27) zwischen dem Grundkörper (23) und einem weiteren Grundkörper (25) angeordnet ist,
- die Membran (27) und der weitere Grundkörper (25) eine weitere Messkammer (31) bilden,
- im Betrieb in der Messkammer (29) ein erster Druck (p1) herrscht,
- im Betrieb in der weiteren Messkammer (31) ein zweiter Druck (p2) herrscht, und
- bei dem die Auslenkung der Membran (27) von einem zu messenden Druck abhängt, der der Differenz des ersten und des zweiten Drucks (p1-p2) entspricht.

5. Druckmesszelle nach Anspruch 4, bei der
- der Grundkörper (23) eine durchgehende in die Messkammer (29) führende Bohrung (37) aufweist,
-- in die ein Druckröhrchen (39) eingeführt ist, über das im Betrieb der erste Druck (p1) der Messkammer (29) zugeführt ist, und
- der weitere Grundkörper (25) eine durchgehende in die Messkammer (31) führende Bohrung (41) aufweist,
-- in die ein Druckröhrchen (43) eingeführt ist, über das im Betrieb der zweite Druck (p2) der Messkammer (31) zugeführt ist.

6. Verfahren zur Herstellung einer Druckmesszelle nach einem der vorangehenden Ansprüche, bei dem
- der Kontaktstift (13, 59, 73) in die Bohrung (11, 57, 71) eingesetzt wird
- zwischen dem Grundkörper (1, 23, 25) und dem Kontaktstift (11, 57, 73) membranbett-seitig ein Lot (14, 61, 75) eingebracht wird,
- der Kontaktstift (11, 57, 73) eingelötet wird,
- das Membranbett glatt geschliffen wird,
- die Elektrode (7, 33, 67) auf das glatte Membranbett aufgebracht wird, und
- Grundkörper (1, 23, 25) und Menibran (5, 27) durch Fügung fest miteinander verbunden werden,
wobei der Kontaktstift (13,59,73), das Lot (14,61,75) und das Membranbett eine durch Schleifen geglättete, glatte Oberfläche bilden, die mit der nachträglich aufgebrachten Elektrode (7,33,67) ein flächige Verbindung eingeht, über die ein gut leitender elektrischer Anschluss vorliegt und durch die glatte Oberfläche an dieser Stelle ein insgesamt glattes Membranbett entsteht, an das sich die Membran (5) im Überlastfall ohne Schaden zu nehmen anschmiegen kann.

7. Verfahren nach Anspruch 6 zur Herstellung einer Druckmesszelle nach Anspruch 5, bei dem
- die Membran (27) mit dem Grundkörper (23) und dem weiteren Grundkörper (25) mittels einer Fügung (34) verbunden wird, und
- das erste Druckröhrchen (39) in den Grundkörper (23) und das zweite Druckröhrchen (43) in den weiteren Grundkörper (25) eingelötet werden.

## Claims

1. Pressure measuring cell with
- a meter body (1, 23, 25), said body being made of ceramic or a monocrystal;
- a membrane (5, 27) connected to the meter body (1, 23, 25) to form a measuring chamber (3, 29, 31), said membrane being made of ceramic or a monocrystal;
- which, during operation, is subject to a deflection which depends on a pressure to be measured (p, p1-p2),
- a membrane bed formed by a surface of the meter body (1, 23, 25) facing towards the membrane,
-- on which at least one electrode (7, 33, 67) Is applied,
--- which, together with a counter-electrode (9, 35, 69) applied to the membrane (5, 27), forms a capacitor whose capacitance is a measure for the deflection of the membrane (5, 27), and
- a contact pin (13, 59, 73) guided through a bore (11, 57, 71) through the meter body (1, 23, 25),
-- via which the electrode (7, 33, 67) for measuring the capacitance is electrically connected, and
-- which is soldered into the bore (11, 57, 71) on the membrane bed side with a soldering metal (14, 61, 75),
--- **characterized in that** the contact pin (13, 59, 73), the soldering metal (14, 61, 75), and the membrane bed form a smooth surface, made smooth by polishing, said surface forming a superficial connection with the electrode (7, 33, 67) applied subsequently, via said superficial connection a well-conducting electrical connection is created, and with the smooth surface giving rise to a smooth membrane bed overall at this point. In the event of an overload the membrane (5) can adapt itself to said membrane bed without causing any damage.

2. Pressure measuring cell as claimed in Claim 1, wherein the contact pin (13, 59, 73) is made of tantalum and the soldering metal is an active brazing solder, particularly a silver-copper soldering metal.

3. Pressure measuring cell as claimed in Claim 1, wherein a pressure (p) to be measured acts on the membrane (5, 27) during operation, and wherein a very low pressure approaching 0 mbar, or a reference pressure (P_{R}) supplied through the meter body (1), is is present in the measuring chamber (3).

4. Pressure measuring cell as claimed in Claim 1, wherein
- the membrane (27) is arranged between the meter body (23) and an additional meter body (25),
- the membrane (27) and the additional meter body (25) form an additional measuring chamber (31),
- a first pressure (p1) is present in the measuring chamber (29) during operation,
- a second pressure (p2) is present in the additional measuring chamber (31) during operation, and
- wherein the deflection of the membrane (27) depends on a pressure to be measured which corresponds to the difference between the first pressure and the second pressure (p1-p2).

5. Pressure measuring cell as claimed in Claim 4, wherein
- the meter body (23) has an end-to-end bore (37) which goes into the measuring chamber (29),
-- into which a pressure tube (39) is introduced, via which the first pressure (p1) is supplied to the measuring chamber (29) during operation, and
- the additional meter body (25) has an end-to-end bore (41) which goes into the measuring chamber (31),
-- into which a pressure tube (43) is introduced, via which the second pressure (p2) is supplied to the measuring chamber (31) during operation.

6. Procedure to produce a pressure measuring cell as claimed in one of the previous claims, wherein
- the contact pin (13, 59, 73) is introduced into the bore (11, 57, 71)
- a soldering metal (14, 61, 75) is applied between the meter body (1, 23, 25) and the contact pin (11, 57, 73) on the membrane bed side,
- the contact pin (11, 57, 73) is soldered in,
- the membrane bed is polished smooth,
- the electrode (7, 33, 67) is applied to the smooth membrane bed, and
- the meter body (1, 23, 25) and the membrane (5, 27) are permanently connected to one another through a connection, wherein the contact pin (13, 59, 73), the soldering metal (14, 61, 75) and the membrane bed form a smooth surface, which is smoothened by polishing, that creates a superficial connection with the electrode (7, 33, 67) applied subsequently, via which a well-conducting electrical connection is created and wherein the smooth surface gives rise to a smooth membrane bed overall at this point, wherein the membrane (5) can adapt itself to the membrane bed in the event of an overload without causing any damage.

7. Procedure as claimed in Claim 6 to produce a pressure measuring cell as claimed in Claim 5, wherein
- the membrane (27) is connected to the meter body (23) and the additional meter body (25) by a connection (34), and
- the first pressure tube (39) is soldered into the meter body (23) and the second pressure tube (43) is soldered into the additional meter body (25).

## Revendications

1. Cellule de mesure de pression avec
- un corps de base (1, 23, 25), le corps de base étant en céramique ou constitué d'un monocristal :
- une membrane (5, 27) formant avec le corps de base (1, 23, 25) une chambre de mesure (3, 29, 31), la membrane étant en céramique ou constituée d'un monocristal ;
- laquelle est soumise, en fonctionnement, à une déviation dépendant d'une pression à mesurer(p, p1-p2),
- un lit de membrane formé par une surface située côté membrane du corps de base (1, 23, 25),
-- sur lequel est appliquée au moins une électrode (7, 33, 67),
--- qui, conjointement avec une contre-électrode (9, 35, 69) appliquée sur la membrane (5, 27), forme un condensateur, dont la capacité est proportionnelle à la déviation de la membrane (5, 27), et
- une broche de contact (13, 59, 73) guidée à travers un alésage (11, 57. 71) à travers le corps de base (1, 23, 25),
-- par le biais de laquelle l'électrode (7, 33, 67) est raccordée électriquement pour la mesure de la capacité et
-- laquelle est soudée, côté lit de membrane, à l'aide de métal d'apport pour brasage (14, 61, 75), dans l'alésage (11, 57, 71),
--- **caractérisé en ce que** la broche de contact (13, 59, 73), le métal d'apport (14, 61, 75), et le lit de membrane forment une surface lisse, polie, laquelle forme avec l'électrode (7, 33, 67), appliquée ultérieurement, une liaison surfacique, par l'intermédiaire de laquelle une connexion électrique bonne conductrice est créée, à laquelle la membrane (5) peut s'adapter sans dommages en cas de surcharge.

2. Cellule de mesure de pression selon la revendication 1, pour laquelle la broche de contact (13, 59, 73) est en tantale et le métal d'apport un métal d'apport actif pour brasage fort, notamment un métal d'apport en argent-cuivre.

3. Cellule de mesure de pression selon la revendication 1, pour laquelle une pression (p) à mesurer agit sur la membrane (5, 27), et pour laquelle une très faible pression proche de 0 mbar, ou une pression de référence (P_{R}) acheminée à travers le corps de base (1) règne dans la chambre de mesure (3).

4. Cellule de mesure de pression selon la revendication 1, pour laquelle
- la membrane (27) est disposée entre le corps de base (23) et un corps de base supplémentaire (25),
- la membrane (27) et le corps de base supplémentaire (25) forment une chambre de mesure supplémentaire (31),
- il règne, en fonctionnement une première pression (p1) dans la chambre de mesure (29),
- il règne, en fonctionnement une deuxième pression (p2) dans la chambre de mesure (31), et
- pour laquelle la déviation de la membrane (27) dépend d'une pression à mesurer, qui correspond à la différence de la première et de la deuxième pression (p1-p2).

5. Cellule de mesure de pression selon la revendication 4, pour laquelle
- le corps de base (23) présente un alésage (37) traversant, aboutissant dans la chambre de mesure (29),
-- dans lequel est introduit un tube de pression (39), par l'intermédiaire duquel, en fonctionnement, la première pression (p1) de la chambre de mesure (29) est acheminée, et
- le corps de base supplémentaire (25) présente un alésage (41) traversant, aboutissant dans la chambre de mesure (31),
-- dans lequel est introduit un tube de pression (43), par l'intermédiaire duquel, en fonctionnement, la première pression (p2) de la chambre de mesure (31) est acheminée.

6. Procédé destiné à la fabrication d'une cellule de mesure de pression selon l'une des revendications précédentes, pour lequel
- la broche de contact (13, 59, 73) est introduite dans l'alésage (11, 57, 71)
- un métal d'apport est appliqué entre le corps de base (1, 23, 25) et la broche de contact (13, 59, 73),
- la broche de contact (13, 59, 73) est soudée,
- le lit de membrane est poli,
- l'électrode (7, 33, 67) est appliquée sur le lit de membrane lisse, et
- le corps de base (1, 23, 25) et la membrane (5. 27) sont reliés entre eux de façon fixe par une liaison par fusion, la broche de contact (13, 59, 73), le métal d'apport (14, 61, 75) et le lit de membrane formant une surface lisse, polie, laquelle forme avec l'électrode (7, 33, 67), appliquée ultérieurement, une liaison surfacique, par l'intermédiaire de laquelle une connexion électrique bonne conductrice est créée, à laquelle la membrane (5) peut s'adapter sans dommages en cas de surcharge.

7. Procédé selon la revendication 6 destiné à la fabrication d'une cellule de mesure de pression selon la revendication 5, pour lequel
- la membrane (27) est reliée avec le corps de base (23) et le corps de base supplémentaire (25) au moyen d'une liaison par fusion (34), et
- le premier tube de pression (39) est soudé dans le corps de base (23) et le deuxième tube de pression (43) est soudé dans le corps de base supplémentaire (25).
